# EUROPÄISCHE PATENTANMELDUNG

(11) **EP 2 141 370 A1**
(43) Veröffentlichungstag der Anmeldung: **06.01.2010**
(21) Anmeldenummer: 09164029.2
(22) Anmeldetag: 29.06.2009
(51) Int. Cl.: F16B 37/06

(54) **Befestigungselement**

(30) Priorität: 03.07.2008 DE 102008032693
(71) Anmelder: Arnold & Shinjo GmbH & Co. KG, 74677 Dörzbach (DE)
(72) Erfinder: Beck, Friedrich, 74613 Öhringen (DE)
(74) Vertreter: Patentanwälte Ruff, Wilhelm, Beier, Dauster & Partner

(57) **Zusammenfassung**

Ein insbesondere als Einstanzmutter ausgebildetes Befestigungselement enthält einen einstückigen metallischen Körper mit einer Anlagefläche (4), in der mittig ein Stanzvorsprung (2) ausgebildet ist. Der Stanzvorsprung (2) springt über die Anlagefläche (4) vor und weist eine äußere scharfe Stanzkante (3) auf. Der Stanzvorsprung (2) wird in der Anlagefläche (4) von einer mindestens teilweise hinterschnittenen Nut (5) umgeben. Außerhalb der Nut (5) ist die Anlagefläche (4) verrippt ausgebildet, um beim Einpressen des Befestigungselements eine Drehsicherung zu verbessern. Die Außenseite des Stanzvorsprungs (2) kann ebenfalls verrippt sein.

## Beschreibung

Die Erfindung betrifft ein Befestigungselement zur Einstanz und Einpressmontage.

Derartige Befestigungselemente sind beispielsweise als Einstanzmuttern bekannt. Um bei Blechen Gegenstände anschrauben zu können, werden solche Einstanzmuttern mit einem Blech verbunden. Die Einstanzmuttern werden auf das Blech angedrückt, das auf der gegenüberliegenden Seite von einer Matrize unterstützt wird. Ein Stanzvorsprung mit einer scharfen Kante stanzt ein Loch in das Blech, bis eine den Stanzvorsprung umgebenden Anlagefläche an dem Blech zur Anlage kommt. Durch das Zusammenwirken der Matrize und des die Einstanzmutter anpressenden Pressstempels wird der Rand des Lochs um den Stanzvorsprung so verformt, dass die Mutter axial festgelegt ist. In der Regel besteht auch ein Kraftschluss in Drehrichtung. Um den Kraftschluss in Drehrichtung zu verbessern, kann um den Stanzvorsprung herum eine Nut angeordnet sein, deren äußere Nutflanke von einer kreisrunden Form abweicht (FR 2607562).

Ebenfalls bekannt ist eine Einstanzmutter, bei der der Stanzvorsprung von einer Nut umgeben ist, deren äußere Nutflanke an mehreren Stellen unterbrochen ist, an denen der Nutgrund bis zur radialen Außenseite der Stanzmutter eben verläuft (GB 2161571).

Weiterhin bekannt ist eine Nietmutter (DE 102007024494), bei der in einer Nut, die einen zentralen Ansatz umgibt, Verrippungen angeordnet sind. Bei der Befestigung von Nietmuttern wird nicht nur das Blech verformt, sondern auch die Nietmutter selbst.

Ebenfalls bekannt ist eine Einpressmontage (EP 1116891), die ebenfalls einen zentralen Vorsprung aufweist, der von einer Nut umgeben ist. In der Nut sind radiale Rippen angeordnet, die aber nicht über die Anlagefläche vorstehen.

Bei einem weiteren bekannten Funktionselement, das mit einem Blech vernietet wird, sind radiale und axiale Vorsprünge und Rücksprünge vorhanden. Eine den zentralen Vorsprung umgebende Anlagefläche zur Auflage auf dem Blech ist hier nicht vorhanden (EP 1806509).

Im Unterschied zu Nietmuttern wird bei Einstanzmuttern die Befestigung in erster Linie durch Verformung des Blechs erreicht.

Es hat sich herausgestellt, dass mit solchen Einstanzmuttern eine sehr gute Befestigung an Blechen durchgeführt werden kann, die auch ein Mitdrehen der Einstanzmutter verhindern kann.

Es hat sich jedoch weiterhin herausgestellt, dass dann, wenn ein solches Befestigungselement gleichzeitig zur Verbindung zweier Bleche dienen soll, die Befestigung bei einer Belastung in Drehrichtung deutlich herabgesetzt ist, und zwar deutlich geringer als bei einem einlagigen Blech mit der gleichen Dicke.

Der Erfindung liegt die Aufgabe zu Grunde, ein zur Einpressmontage geeignetes Befestigungselement zu schaffen, das eine erhöhte Festigkeit gegenüber einem Mitdrehen aufweist, so dass es auch zur Anbrhgung an und damit Verbindung zweier Bleche dienen kann.

Zur Lösung dieser Aufgabe schlägt die Erfindung ein Befestigungselement mit den im Anspruch 1 genannten Merkmalen vor. Weiterbildungen der Erfindung sind Gegenstand von Unteransprüchen.

Das von der Erfindung vorgeschlagene Befestigungselement wird in der gleichen Weise an einem ungelochten Blech angebracht wie die bisher bekannten Befestigungselemente. Bei dem verformen des Lochrands in die Nut hinein erfolgt eine Anpressung der Anlagefläche auf die Oberfläche des Blechs. Dabei graben sich die von den Rippen gebildeten Vorsprünge in das Blech hinein. Es entsteht ebenfalls, wie im Stand der Technik, eine flächige Anlage zwischen Blechoberfläche und Anlagefläche, wobei die flächige Anlage jetzt nicht mehr in einer Ebene liegt, sondern Vorsprünge und Rücksprünge aufweist. Auf diese Weise verbessert sich die Widerstandsfähigkeit gegenüber Drehmomenten. Auf diese Weise lässt sich ein solches Befestigungselement zusätzlich zu seiner Befestigungsaufgabe auch dazu verwenden, an genau dieser Stelle zwei aufeinander liegende Bleche miteinander zu verbinden. Natürlich kann das Befestigungselement auch an einem einlagigen Blech verwendet werden.

Erfindungsgemäß kann in Weiterbildung vorgesehen sein, dass eine Flanke der in der Anlagefläche ausgebildeten Nut von der äußeren Begrenzungsfläche des Stanzvorsprungs gebildet ist. Damit grenzt die Nut direkt an den Stanzvorsprung an.

In Weiterbildung der Erfindung kann vorgesehen sein, dass die radial äußere Nutflanke hinterschnitten ausgebildet ist. Die radial äußere Nutflanke bildet einer umlaufende Fläche, deren Länge größer ist als die radial weiter Ihnen angeordneten Nutflanke. Daher steht an dieser Stelle für das zu verformen der Blech eine längere Anlagefläche zur Verügung.

Es ist aber ebenfalls möglich und wird von der Erfindung vorgeschlagen, dass die radial innere Nutflanke hinterschnitten ausgebildet ist.

In Weiterbildung der Erfindung kann vorgesehen sein, das die an dem freien Ende des Stanzvorsprungs gebildete Kante längs eines Kreises verläuft, der Stanzvorsprung also einen Querschnitt mit einer kreisförmigen Kontur aufweist. Damit wird bei dem Befestigen des Befestigungselements ein kreisrundes Loch hergestellt, so dass die Belastungen beim Verformen überall gleich sind.

Erfindungsgemäß kann in Weiterbildung der Erfindung auch vorgesehen sein, dass die Nut längs eines Kreises verläuft, also die Form eines Kreisrings aufweist. Aufgrund der von der Erfindung vorgeschlagenen Maßnahmen ist es zur Sicherung gegenüber Drehmomenten nicht mehr erforderlich, die Nut von einem Kreis abweichen zu lassen, da die Sicherung gegenüber Drehmomenten durch den Kraftschluss zwischen dem Blech und dem Befestigungselement und den Formschluss der verrippten Anlagefläche gewährleistet wird.

In nochmaliger Weiterbildung der Erfindung kann vorgesehen sein, dass eine Nutflanke der Nut ebenfalls verrippt ist. Hierdurch wird eine nochmaliger Verbesserungen der Sicherung gegenüber Drehmomenten erreicht. Insbesondere kann vorgesehen sein, dass es sich bei der verrippten Oberfläche um die in radialer Richtung innere Nutflanke der Nut handelt.

Dagegen schlägt die Erfindung in Weiterbildung vor, dass die radial äußere Nutflanke glattflächig ausgebildet ist.

Das Befestigungselement kann einerseits dazu verwendet werden, zwei Bleche miteinander zu verbinden. Seine eigentliche Aufgabe besteht aber darin, an dem Blech oder der doppelten Lage von Blechen ein weiteres Element zu befestigen. Hierzu kann vorgesehen sein, dass durch den Stanzvorsprung ein Loch hindurch geht, das insbesondere serkrecht zur Anlagefläche des Befestigungselements verläuft, und damit dann natürlich auch senkrecht zur Oberfläche des Blechs.

Dieses Loch kann also dazu dienen, ein weiteres Element zu befestigen. Beispielsweise kann es sich bei dem Loch um eine glattflächige Bohrung handeln, wenn beispielsweise ein stabförmiges Element in dem Loch gehalten werden soll, beispielsweise auch drehbar oder in gewissem Ausmaß auch verschiebbar.

Es ist aber ebenfalls möglich und liegt im Rahmen der Erfindung, dass dieses Loch ein Innengewinde aufweist, so dass es sich bei dem Befestigungselement um eine Einstanzmutter handelt. Damit kann dann einer Verschraubung gegenüber dem Blech erfolgen, auch wenn das Blech nicht dick genug ist, um ein ausreichend langes Gewinde aufzunehmen.

Es ist aber ebenfalls möglich, dass an dem Befestigungselement auf seiner der Anlagefläche abgewandten Seite ein Vorsprung vorhanden ist, beispielsweise ein Vorsprung mit einer zylindrischen Außenseite. Dies kann auch dazu verwendet werden, hier ein weiteres Element zu befestigen. Es ist auch denkbar, dass dieser Vorsprung als Zapfen ausgebildet ist und ein Gewinde aufweist. Das Befestigungselement kann dann wie ein Stehbolzen wirken.

Die Erfindung schlägt vor, ein solches Befestigungselement auch dazu zu verwenden, zwei Bleche miteinander zu verbinden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfhdung sowie anhand der Zeichnung. Hierbei zeigen:
- Figur 1: die Ansicht eines Befestigungselements auf seiner Anlage- fläche;
- Figur 2: eine Seitenansicht des Befestigungselements der Figur 1;
- Figur 3: eine perspektivische Darstellung eines Befestigungsele- ments;
- Figur 4: eine ebenfalls perspektivische Ansicht eines Befestigungs- elements;
- Figur 5: eine der Figur 4 entsprechende Darstellung einer abgeän- derten Ausführungsform;
- Figur 6: einen Schnitt durch ein Befestigungselement nach der Erfin- dung;
- Figur 7: eine Seitenansicht eines Befestigungselements und das Zu- sammenwirken mit einem Blech;
- Figur 8: einen der Figur 6 entsprechenden Schnitt im befestigten Zu- stand.

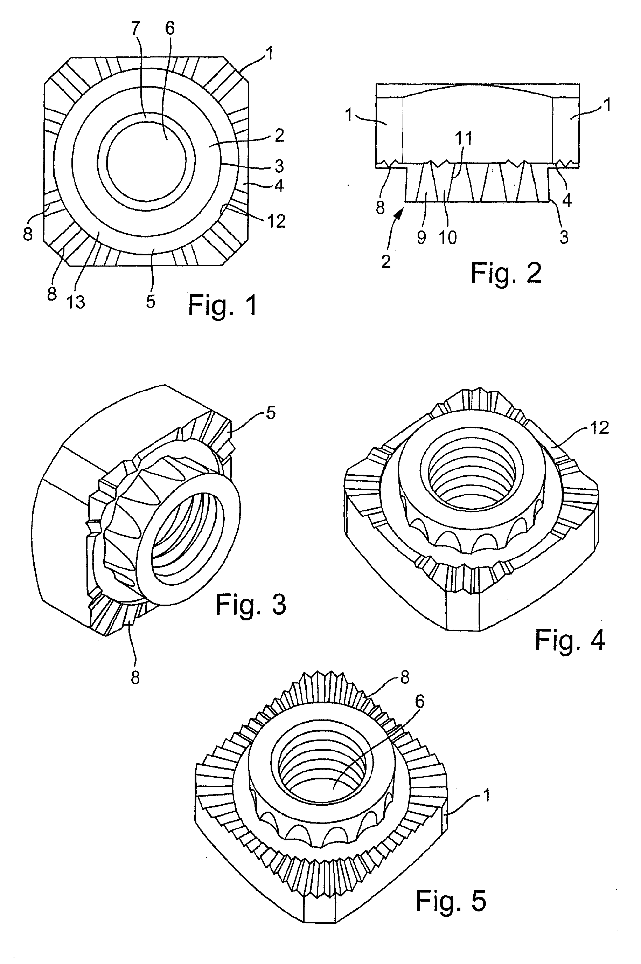

In Figur 1 ist ein Befestigungselement, das als Einstanzmutter ausgebldet ist, von seiner Unterseite zu sehen. Der äußere Umfang des Befestigungselements ist quadratisch mit abgeschrägten Ecken 1. Im mittleren Bereich des Befestigungselements ist ein Stanzvorsprung 2 angeordnet, der eine Außenkante drei aufweist. Dieser Außenkante drei ist scharf ausgebildet und verläuft in der dargestellten Ansicht längs eines Kreises

Radial an den Stanzvorsprung 2 anschließend ist in der Anlagefläche 4 des Befestigungselements eine Nut 5 ausgebildet, die von zwei Nutflanken begrenzt ist. Die Nut 5 verläuft konzentrisch zu dem Außenrand des Stanzvorsprungs 2. Koaxial wird der Stanzvcrsprung 2 von einer Öffnung 6 durchsetzt, die ein Innengewinde 7 aufweist.

In der zwischen der Nut 5 und der Außenkontur des Befestigungselements verlaufenden Anlagefläche 4 sind radiale Rippen 8 angeordnet, die bis zur Außenseite des Befestigungselements verlaufen. Diese Rippen 8 sind über große Teile der Anlagefläche 4 verteilt angeordnet. Sie verlaufen alle radial bezüglich des Mittelpunkts der Öffnung 6.

Figur 2 zeigt eine Seitenansicht des Befestigungselements der Figur 1. Dabei ist zu sehen, dass der Stanzvorsprung 2 über die Anlagefläche 4 des Befestigungselements vorspringt. Die Außenkontur des Stanzvorsprungs 2 weist Vertiefungen 9 und zwischen diesen gebildete Vorsprünge 10 auf, wobei die Trennkanten 11 zwischen Vorsprüngen 10 und Vertiefungen 9 schräg zur Längsachse verlaufen. Die in Figur 2 zu sehende Außenseite des Stanzvorsprungs 2 bildet gleichzeitig die eine Nutflanke der in Figur 1 zu sehenden umlaufenden Nut 5, während die zweite Nutflanke 12 in Figur 2 nicht zu sehen ist. Deutlich sind aber auch hier die Rippen 8 an der Unterseite der Anlagefläche 4 zu sehen.

Die Tiefe der Vertiefungen 9 nimmt von der Stanzkante 3 bis zur Anlage-fläche 4 beziehungsweise bis zum Nutgrund 13 der Nut 5 zu. Nähere Einzelheiten kann man der Figur 3 entnehmen, de eine perspektivische Ansicht eines Befestigungselements von schräg unten zeigt. Hier ist die Anordnung der Rippen 8 deutlicher zu sehen, ebenso die Anordnung der Vertiefungen 9 und Vorsprünge 10 an der Außenseite des Stanzvorsprungs.

Das gleiche kann man auch der Figur 4 entnehmen. Hier ist im Übrigen auch zu sehen, dass die äußere Nutflanke 12 einen Hinterschnitt bildet.

Bei der Ausführungsform der Figur 5 weist die Anlagefläche eng anehander anliegende zickzackförmige Rippen 8 auf, während der Restdes Befestigungselements gegenüber der vorhergehenden Ausführungsform unverändert bleibt.

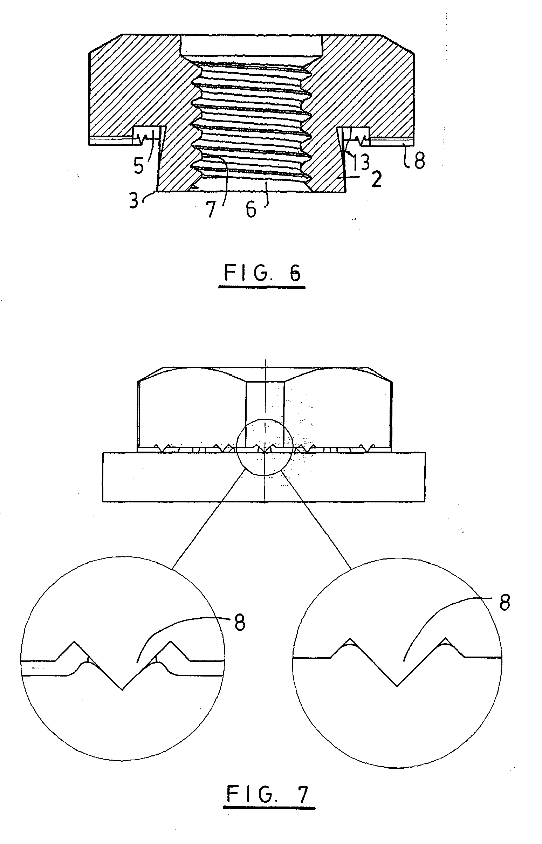

Die Figur 6 zeigt einen Querschnitt durch das von der Erfindung vorgeschlagene Befestigungselement. Es ist zu sehen, dass die Unterseite des breiteren Teils, also die quer zu der mit dem Gewinde 7 versehene Bohrung 6 verlaufende Anlagefläche 4 Rippen 8 aufweist, die radial orientiert sind. Der Nutboden 13 der Nut 5 bleibt dabei aber von Rippen frei.

Die Wirkungsweise des von der Erfindung vorgeschlagenen Befestgungselements wird anhand der Figur 7 erläutert. Beim Einstanzen wird zunächst mithilfe des Stanzvorsprungs 2 ein Loch durch die gegebenenfalls zwei aufeinander liegenden Bleche hergestellt. Dann gelangen die Rippen 8 zur Auflage auf der Oberfläche des oberen Blechteils. Dieser Zustand ist oben in Figur 7 dargestellt. Beim weiteren vorwärts Pressen des Befestigungselements wird das Blech im Randbereich um das in dem Blech gestanzte Loch herum in die Nut 5 hinein verformt. Gleichzeitig graben sich die spitzen Rippen 8 in die Oberfläche des Blechteils ein, siehe links unten in Figur 7. Bei weiterem Aufpressen liegen die nicht verrippten Bereiche der Anlagefläche 4 auf der nicht verformten Oberfläche des Blechs auf, während die Zwischenräume zwischen den Rippen 8 durch das Blech fast vollständig ausgefüllt sind. Dies ist rechts unten in Figur 7 dargestellt.

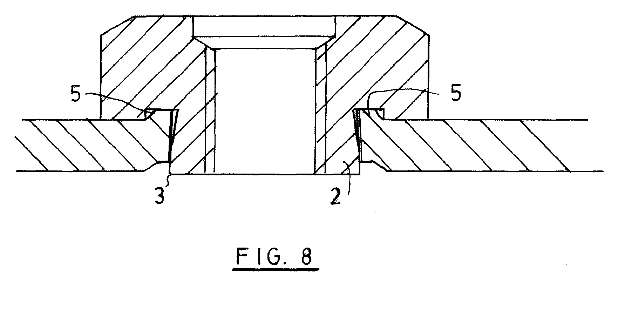

Die nun folgende Figur 8 zeigt, wie das Befestigungselement in mit dem Blech verbundenen Zustand aussieht. Das Blech wird in die Nut 5 hinein verformt, wobei der Bereich außerhalb des Lochs und außerhalb des in die Nut 5 hinein geformten Randes im wesentlichen unverändert bleibt. Das Eingraben der Rippen 8 in die Oberfläche des Blechs ist in Figur 7 dargestellt

Ein insbesondere als Einstanzmutter ausgebildetes Befestigungselement enthält einen einstückigen metallischen Körper mit einer Anlagefläche, in der mittig ein Stanzvorsprung ausgebildet ist. Der Stanzvorsprung springt über die Anlagefläche vor und weist eine äußere scharfe Stanzkante auf. Der Stanzvorsprung wird in der Anlagefläche von einer mindestens teilweise hinterschnittenen Nut umgeben. Außerhalb der Nut ist die Anlagefläche verrippt ausgebildet, um beim Einpressen des Befestigungselements eine Drehsicherung zu verbessern. Die Außenseite des Stanzvorsprungs kann ebenfalls verrippt sein.

## Patentansprüche

1. Befestigungselement zur Einpressmontage, mit
1.1 einer an dem Befestigungselement ausgebildeten mindestens angenähert ebenen Anlagefläche (4),
1.2 einem in der Anlagefläche (4) angeordneten über die Ebene der Anlagefläche (4) vorspringenden Stanzvorsprung (2) mit einer umlaufenden Kante (3),
1.3 einer in der Anlagefläche (4) ausgebildeten den Stanzvorsprung (2) umgebenden Nut (5) mit zwei Nutflanken, von denen
1.4 mindestens eine Nutflanke (12) hinterschnitten ausgebildet ist, und wobei
1.5 die Anlagefläche (4) mindestens teilweise verrippt ausgebildet ist.

2. Befestigungselement nach Anspruch 1, bei dem eine Nutflanke von der äußeren Begrenzungsfläche des Stanzvorsprungs (2) gebildet ist.

3. Befestigungselement nach Anspruch 1 oder 2, bei dem die radial äußere Nutflanke (12) hinterschnitten ausgebildet ist.

4. Befestigungselement nach einem der vorhergehenden Anspüche, bei dem die radial innere Nutflanke hinterschnitten ausgebildet ist.

5. Befestigungselement nach einem der vorhergehenden Anspüche, bei dem der Stanzvorsprung (2) einen Querschnitt mit einer kreisförmigen Kontur aufweist.

6. Befestigungselement nach einem der vorhergehenden Anspüche, bei dem die Nut (5) die Form eines Kreisrings aufweist.

7. Befestigungselement nach einem der vorhergehenden Anspüche, bei dem eine Nutflanke verrippt ausgebildet ist.

8. Befestigungselement nach Anspruch 7, bei dem die radial innere Nutflanke verrippt ausgebildet ist.

9. Befestigungselement nach einem der vorhergehenden Anspüche, bei dem die radial äußere Nutflanke (12) glattflächig ausgebildet ist.

10. Befestigungselement nach einem der vorhergehenden Anspüche, bei dem der Stanzvorsprung (2) ein senkrecht zur Anlagefläche (4) verlaufendes Loch (6) aufweist.

11. Befestigungselement nach Anspruch 10, bei dem das Loch (6) ein Innengewinde (7) aufweist.

12. Befestigungselement nach Anspruch 10, bei dem das Loch in dem Stanzvorsprung (2) glattflächig, insbesondere äs zylindrische Bohrung ausgebildet ist.

13. Befestigungselement nach einem der vorhergehenden Anspüche, mit einem auf der der Anlagefläche (4) abgewandten Seite angeordneten Vorsprung.

14. Befestigungselement nach Anspruch 13, bei dem der Vorsprung als Zapfen mit einer glatten Mantelfläche ausgebildet ist.

15. Befestigungselement nach Anspruch 13, bei dem der Vorsprung als Gewindezapfen ausgebildet ist.

16. Verwendung eines Befestigungselements nach einem der vorhergehenden Ansprüche zur Stanzverbindung zweier Bleche oder dergleichen.

17. Befestigungsanordnung aus einem Befestigungselement nach einem der vorhergehenden Ansprüche und mindestens einem Blech, wobei die Rippen (8) der Anlagefläche (4) des Befesitgungselements in die im wesentlichen eben bleibende Oberfläche des Blechs eingepresst und das Blech in die Zwischenräume zwischen die Rippen (8) hinein verformt ist.
